Europäisches Patentamt

European Patent Office

Office européen des brevets

(11) Veröffentlichungsnummer: **0 443 103 A2**

# (12) EUROPÄISCHE PATENTANMELDUNG

(21) Anmeldenummer: **90121778.6**

(22) Anmeldetag: **14.11.90**

(51) Int. Cl.⁵: **H04L 12/28**

(30) Priorität: **17.02.90 DE 4005087**

(43) Veröffentlichungstag der Anmeldung:
**28.08.91 Patentblatt 91/35**

(84) Benannte Vertragsstaaten:
**AT BE CH DE DK ES FR GB GR IT LI NL SE**

(71) Anmelder: **GEBRÜDER MERTEN GMBH & CO. KG**
**Kaiserstrasse 150**
**W-5270 Gummersbach 1(DE)**

(72) Erfinder: **Kürten, Roland**
**Küppersherweg 5**
**W-5272 Wipperfürth(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Anschlusseinheit für ein Hausleitsystem.**

(57) Die Anschlußeinheit besteht aus einer Busankopplungs-Einheit (BA), die über Datenleitungen (10) mit dem Datennetz korrespondiert, und einem funktionsspezifischen Adapter (AD), der steckbar mit der Busankopplungs-Einheit (BA) verbunden ist und der auf das externe Gerät (11) abgestimmt ist, mit dem die Anschlußeinheit zusammenwirken soll. Für die Kommunikation zwischen Busankopplungs-Einheit (BA) und Adapter (AD) ist außer einer Datenleitung (L1) und einer Transmit-Signale übertragenden zweiten Leitung (L2) eine dritte Leitung (L3) vorgesehen, auf der jedesmal dann, wenn der Empfänger ein zeitgleich mit einem Transmit-Signal vorhandenes Datensignal empfängt, von dem Empfänger ein Quittiersignal geliefert wird. Der Sender sendet das nächstfolgende Datensignal erst nach Eintreffen des Quittiersignals. Dadurch kann die Datenübertragung zu jedem beliebigen Zeitpunkt beliebig lange unterbrochen werden, während der betreffende Sender oder Empfänger anderweitige Aufgaben ausführt, die vorrangig durchgeführt werden müssen.

## FIG.1

## ANSCHLUSSEINHEIT FÜR EIN HAUSLEITSYSTEM

Die Erfindung betrifft eine Anschlußeinheit für ein Hausleitsystem nach dem Oberbegriff des Patentanspruchs 1.

In der Hausleittechnik verwendet man ein in einem Gebäude installiertes Datennetz, das Anschlußeinheiten aufweist, über die externe Geräte zum Schalten, Steuern, Regeln, Messen und/oder Überwachen miteinander und/oder mit einer Zentraleinheit korrespondieren können. Zwischen den Anschlußeinheiten können untereinander oder mit der Zentraleinheit Signaltelegramme ausgetauscht werden. EP 0 344 609 beschreibt ein digitales Signalübertragungssystem für die Hausleittechnik, bei dem die Anschlußeinheiten, obwohl unterschiedliche Typen benötigt werden, jeweils die gleiche Busankopplungs-Einheit enthalten. Die Individualisierung der Anschlußeinheiten entsprechend ihrer auszuführenden Funktion bzw. des anzuschließenden externen Geräts erfolgt durch einen Adapter, der der Busankopplungs-Einheit hinzugefügt wird und der als steckbare Einheit ausgebildet sein kann. Auf diese Weise ist es möglich, bei der Installation des Hausleitsystems, unabhängig von den Funktionen und Arten der anzuschließenden externen Geräte, an allen Anschlußeinheiten gleiche Busankopplungs-Einheiten zu montieren. Der Busankopplungs-Einheit wird dann vor Inbetriebnahme des Systems der für die jeweilige Funktion vorgesehene Adapter hinzugefügt, wodurch die Anschlußeinheit komplettiert wird. Die Busankopplungs-Einheiten und Adapter enthalten in der Regel Prozessoren, die miteinander kommunizieren, d.h. in beiden Richtungen Daten austauschen. Dieser Datenaustausch zwischen Busankopplungs-Einheit und Adapter muß jedoch unterbrochen werden, wenn zeitkritische und somit bevorrechtigte anderweitige Funktionen von der Busankopplungs-Einheit oder vom Adapter ausgeführt werden müssen. Beispielsweise kann es vorkommen, daß während einer internen Datenübertragung zwischen Busankopplungs-Einheit und Adapter aus dem Datennetz ein Telegramm für die betreffende Anschlußeinheit empfangen werden muß, oder daß der Adapter von dem angeschlossenen externen Gerät einen Befehl oder ein Telegramm erhält. Diese zeitkritischen Funktionen müssen von der Busankopplungs-Einheit oder dem Adapter unverzüglich ausgeführt werden, so daß die interne Datenübertragung zwischen Busankopplungs-Einheit und Adapter vorübergehend unterbrochen werden muß.

Damit die interne Datenübertragung zwischen Busankopplungs-Einheit und Adapter wenig steckbare Verbindungen erfordert, wird diese Datenübertragung seriell über zwei Leitungen durchgeführt, wobei noch zusätzliche Leitungen für Hilfsfunktionen vorhanden sein können. Für die serielle Datenübertragung verwendet man zweckmäßigerweise einen Datenbus-Übertragungsmodus, z.B. den I²C-Modus von Valvo. Ein solcher Busmodus erfordert vor der Datenübertragung eine Start-Routine und er ermöglicht keine willkürliche Unterbrechung der Datenübertragung. Bei Unterbrechung der Datenübertragung würde die Gefahr bestehen, daß teilweise übertragene Daten nicht komplettiert würden und daß Daten verlorengehen. Außerdem erfordert jeder Neustart eine gewisse Zeit.

Der Erfindung liegt die Aufgabe zugrunde, eine Anschlußeinheit der im Oberbegriff des Patentanspruchs 1 angegebenen Art zu schaffen, die jederzeit die Ausführung bevorrechtigter Funktionen von Busankopplungs-Einheit und/oder Adapter ermöglicht, wobei Datendurchsatz und Datensicherheit erhöht sind und gewährleistet ist, daß bei einer Unterbrechung der Datenübertragung keine Daten verloren gehen.

Die Lösung dieser Aufgabe erfolgt erfindungsgemäß mit den im Patentanspruch 1 angegebenen Merkmalen.

Bei der erfindungsgemäßen Anschlußeinheit, bei der die Übertragung der Datenbits durch zusätzliche Transmit-Signale erfolgt, wird nach jedem Datenbit vom Empfänger ein Quittiersignal an den Sender geliefert. Erst wenn der Sender das Quittiersignal erhalten hat, liefert er das nächste Datensignal zusammen mit dem zugehörigen Transmit-Signal. Bleibt ein Quittiersignal aus, dann wird die Datenübertragung an dieser Stelle unterbrochen und sie kann anschließend fortgesetzt werden, wenn zu einem späteren Zeitpunkt das Quittiersignal vom Empfänger geliefert wird. Damit ist es möglich, die serielle Datenübertragung an jeder beliebigen Stelle zu unterbrechen und sie nach Beendigung der Unterbrechung unverzüglich fortzusetzen. Wenn der Sender bevorrechtigte zeitkritische Funktionen ausführen muß, wird die Erzeugung der Transmit-Signale unterbrochen und wenn der Empfänger solche Funktionen ausführen muß, wird die Erzeugung der Quittiersignale unterbrochen. In jedem Fall kann die Datenübertragung auch innerhalb eines Bytes angehalten und nach Beendigung der Unterbrechung fortgesetzt werden. Es ist daher keine Neustartroutine erforderlich.

Die erfindungsgemäße Anschlußeinheit kann außer der Busankopplungs-Einheit und dem Adapter auch noch andere Geräte enthalten, die an die Datenleitung angeschlossen sind, jedoch nicht an der Quittierung teilnehmen, weil sie keine bevorrechtigten zeitkritischen Funktionen ausführen müssen. Solche Geräte sind beispielsweise Speicher, in denen die Adresse sowie Angaben über die Funktion der Anschlußeinheit gespeichert sind. Diese zusätzlichen Geräte sind nur an die Datenleitung und an die die Transmit-Signale übertragende zweite Leitung angeschlossen, nicht aber an die dritte Leitung.

Ein besonderer Vorteil der Datenübertragung mit den Quittiersignalen besteht darin, daß sie mit einer entsprechenden Datenübertragung ohne Quittiersignale voll kompatibel ist, so daß Geräte, die für einen bestimmten Busmodus ausgelegt sind und die keine zeitkritischen Informationen ausführen müssen, also keine Unterbrechung der Datenübertragung erfordern, mit solchen Geräten zusammenarbeiten können, die eine Unterbrechung der Datenübertragung veranlassen können.

Die Datenübertragung ermöglicht in beiden Richtungen sowohl das Schreiben als auch das Lesen von Daten. Unter Schreiben wird der Fall verstanden, daß der Sender die Übertragung von Daten aus dem Sender heraus in den Empfänger veranlaßt und durchführt. Unter Lesen wird der Fall verstanden, daß der Empfänger die Datenübertragung aus dem Sender veranlaßt. Beim Schreiben und Lesen brauchen nur die Funktionen der zweiten und der dritten Leitung miteinander vertauscht zu werden.

Im folgenden wird unter Bezugnahme auf die Zeichnungen ein Ausführungsbeispiel der Erfindung näher erläutert.

Es zeigen:

Fig. 1 ein Blockschaltbild der Anschlußeinheit,

Fig. 2 ein Zeitdiagramm der Datenübertragung zwischen Busankopplungs-Einheit und Adapter,

Fig. 3 die Bestätigung eines Bytes beim Schreiben bei einem üblichen Zweileiter-Modus,

Fig. 4 die Bestätigung eines Bytes beim Schreiben bei dem Dreileiter-Modus, der mit dem Zweileiter-Modus kompatibel ist,

Fig. 5 die Bestätigung eines Bytes beim Lesen beim Zweileiter-Modus, und

Fig. 6 die Bestätigung eines Bytes beim Lesen bei dem Dreileiter-Modus, der mit dem Zweileiter-Modus kompatibel ist.

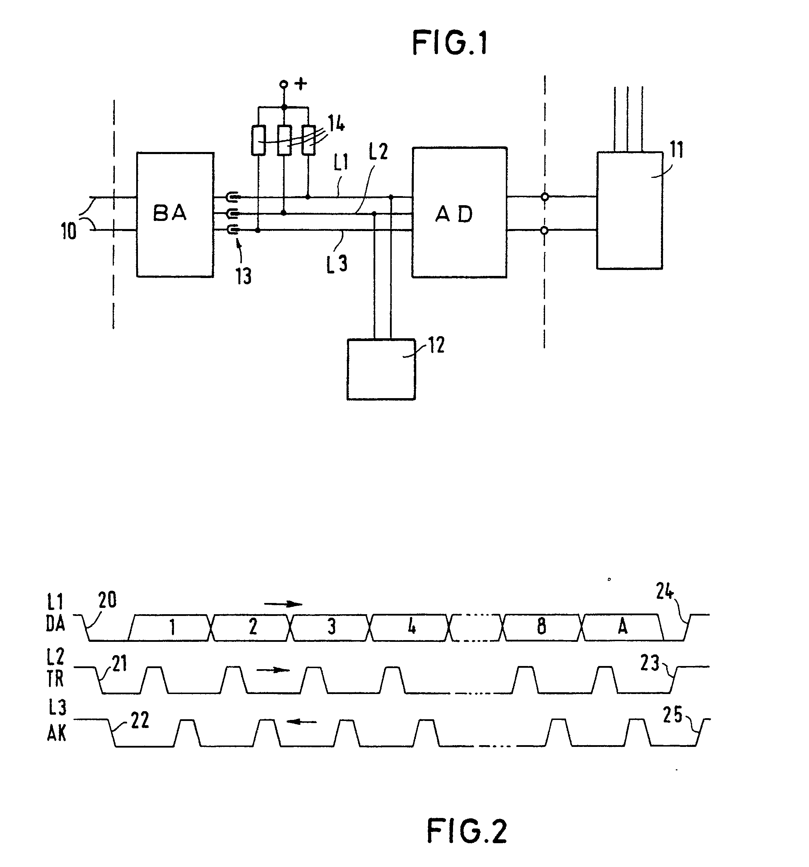

In Fig. 1 ist das Blockschaltbild der Anschlußeinheit dargestellt. Diese weist eine Busankopplungs-Einheit BA auf, die über zwei Adern 10 mit einem in dem Gebäude installierten Datenleitungsnetz verbunden ist. Die Busankopplungs-Einheit enthält einen Mikroprozessor und sie ist imstande, von den Leitungen 10 Datentelegramme zu empfangen und solche Datentelegramme auf die Leitungen 10 auszusenden.

Die Busankopplungs-Einheit enthält ferner einen Adapter AD, der ebenfalls einen Mikroprozessor enthält und mit einem extern anzuschließenden Gerät 11 verbunden werden kann. Dem Adapter AD ist ein auslesbarer Speicher 12 zugeordnet.

Busankopplungs-Einheit BA und Adapter AD sind durch drei Leitungen L1, L2 und L3 miteinander verbunden. Diese Verbindung ist über Steckkontakte 13 lösbar. Jede der Leitungen L1, L2 und L3 ist über einen Widerstand 14 mit Pluspotential verbunden, so daß das Ruhepotential dieser Leitungen Pluspotential ist. Außer den genannten Leitungen können noch weitere Leitungen zwischen Busankopplungs-Einheit und Adapter vorhanden sein, die jedoch im vorliegenden Fall nicht von Interesse sind.

Die Datenübertragung zwischen Busankopplungs-Einheit und Adapter basiert auf dem I²C-Bus-Modus. Hierbei bildet die Leitung L1 die Datenleitung und die Leitung L2 dient zur Übertragung von Transmit-Signalen.

Der I²C-Bus-Modus ist generell in den ersten beiden Zeilen von Fig. 2 dargestellt. Auf der Datenleitung L1 werden die Datenbits DA übertragen und auf der Leitung L2 die Transmit-Signale TR. Die Datensignale DA umfassen jeweils ein Byte aus 8 Datenbits 1-8, sowie im Anschluß an das achte Datenbit ein Bestätigungs-Bit A.

Die Transmit-Signale sind Taktimpulse, die jeweils die Datenübertragung vom Sender zum Empfänger zeitlich steuern. Der Empfänger übernimmt ein Datensignal immer dann, wenn im Zeitraum dieses Datensignals ein Transmit-Signal TR ansteht. Bei der Übertragungsart "Schreiben" werden die Datensignale und die Transmit-Signale von demselben Sender ausgesandt. Dies ist in Fig. 2 durch Pfeile angegeben.

Die Transmit-Signale TR, die auf Leitung L2 übertragen werden, haben eine Impulsbreite, die kleiner ist als die sich ergebende halbe Impulsbreite der Datenimpulse DA, und insbesondere kleiner als ein Drittel der Datenimpulsbreite. Die Transmit-Signale TR werden jeweils in der ersten Hälfte der Datensignale DA erzeugt. Nach Empfang eines Transmit-Signals TR zusammen mit dem zugehörigen Datensignal DA erzeugt der Empfänger ein Quittiersignal AK, das auf Leitung L3 zum Empfänger gesandt wird. Der Sender beendet die Erzeugung des Datenbits und sendet nur dann das nächste Datenbit und das nächste Transmit-Signal, wenn er zuvor das Quittiersignal AK erhalten hat. Auf diese Weise kann die Impulsübertragung an jeder beliebigen Stelle, d.h. bei jedem Bit eines Bytes angehalten und danach fortgesetzt werden, wenn das Quittiersignal AK erzeugt wird.

Die Startbedingung für die Datenübertragung besteht darin, daß der Sender auf den Leitungen L1 und L2 die Signale 20 und 21 gleichzeitig oder kurz hintereinander setzt. Der Empfänger antwortet dann mit dem Signal 22.

Die Beendigung der Datenübertragung wird durch das gleichzeitige oder aufeinanderfolgende Rücksetzen der Leitungen L2 und L1 gemäß den Impulsflanken 23,24 in Fig. 2 definiert, worauf der Empfänger mit dem Rücksetzen der Leitung L3 an der Impulsflanke 25 antwortet.

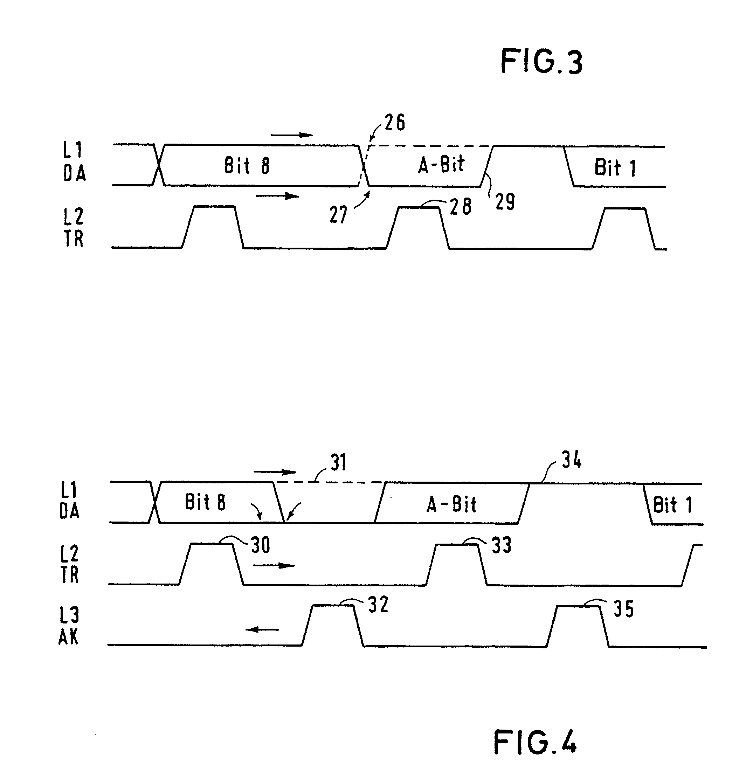

Fig. 3 zeigt die übliche Auswertung des Bestätigungs-Bits A am Ende eines Bytes. Nach der Übertragung des achten Bits legt der Sender die Leitung L1 bei 26 auf High-Pegel. Der Empfänger überschreibt jedoch dieses Signal bei 27 und setzt Leitung L1 auf Low-Pegel. Nach Empfang des nächstfolgenden Transmit-Signals 28 gibt der Empfänger die Leitung L1 wieder frei, so daß diese Leitung für den Rest des A-Bits wieder auf High-Pegel geht, bis das Bit 1 des nächstfolgenden Bytes auftritt.

Der modifizierte Bestätigungsvorgang für das Dreileiter-System ist in Fig. 4 dargestellt. Unmittelbar nach Empfang des dem achten Bit zugeordneten Transmit-Signals 30 durch den Empfänger überschreibt der Empfänger die Datenleitung L1 bei 31 mit Low-Pegel (entspricht Pegel für A-Bit) und dabei erzeugt er das betreffende Quittiersignal 32 für das Bit 8. Der Sender, der das Quittiersignal 32 empfängt, legt die Datenleitung L1 auf High-Pegel. Als resultierendes Signal stellt sich das A-Bit ein. Der Sender erkennt das A-Bit und bestätigt das Einlesen dieses A-Bits mit dem Transmit-Signal 33. Der Empfänger legt daraufhin bei 34 die Datenleitung L1 auf High-Pegel und gibt dies durch einen AK-Impuls 35 auf Leitung L3 bekannt. Damit ist die Übertragung eines Bytes einschließlich des Bestätigungs-Bits A abgeschlossen. Der Sender kann nun mit der Übertragung des nächsten Bytes beginnen.

Man erkennt, daß ein nur an die Leitungen L1 und L2 angeschlossenes Gerät, das für den Übertragungsmodus nach Fig. 3 ausgelegt ist, beispielsweise der Speicher 12 in Fig. 1, auch dann in der richtigen Weise angesteuert wird, wenn zusätzlich noch die Leitung L3 vorhanden ist und wenn die Bestätigung eines Bytes in der anhand von Fig. 4 beschriebenen Weise erfolgt.

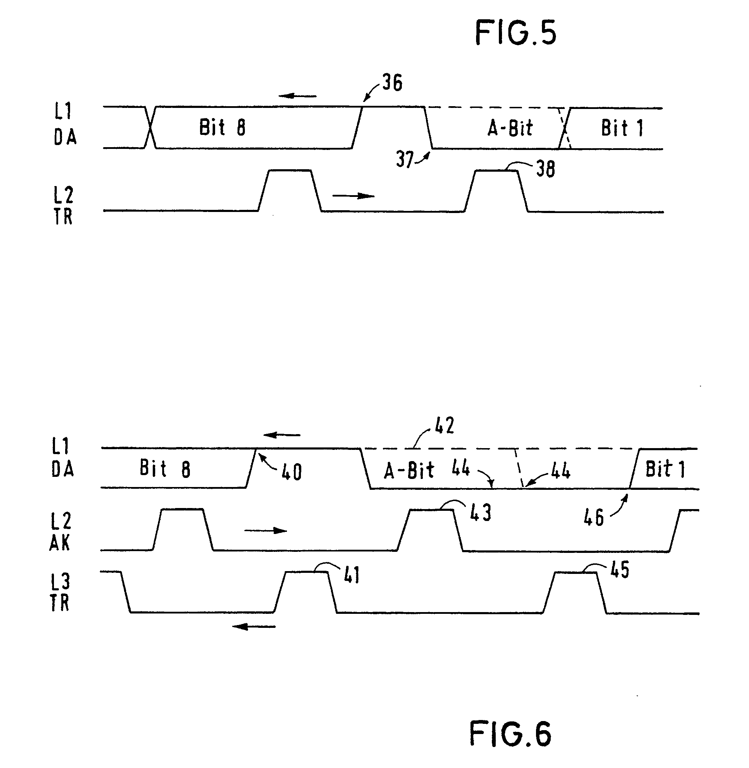

In Fig. 5 ist der Verlauf der Bits auf der Datenleitung L1 und der Transmit-Leitung L2 für den Fall des Lesens dargestellt. Für den Fall des Lesens ist diejenige Station, die die Daten liefert (wie beim Schreiben), als Sender bezeichnet und diejenige Station, die die Daten empfängt, ist als Empfänger bezeichnet. Im Unterschied zum Schreiben werden beim Lesen die Transmit-Signale vom Empfänger ausgegeben. Gemäß Fig. 5 wird nach Übertragung des achten Bits die Leitung L1 vom Sender auf High-Pegel gelegt (bei 36). Der Empfänger kann nunmehr den High-Pegel mit dem Bestätigungs-Bit (A-Bit) überschreiben (37). Während des nun folgenden TR-Impulses 38 empfängt der Sender das A-Bit, das vom Empfänger erzeugt worden ist, und erkennt somit, daß die Übertragung des Bytes abgeschlossen ist. Daraufhin nimmt der Empfänger das Signal DA wieder auf Low-Pegel zurück und die Übertragung des nächsten Bytes kann erfolgen.

Die Datenübertragung mit Bestätigungs-Bit (A-Bit) und zusätzlichen Quittiersignalen für die Datenbits ist in Fig. 6 dargestellt, wobei ein nur an die Leitungen L1 und L2 angeschlossenes Gerät, beispielsweise der Speicher 12 in Fig. 1, in gleicher Weise ausgelesen werden kann wie bei der Übertragungsart nach Fig. 5.

Auch beim Auslesen der Daten aus einem Sender gemäß Fig. 6 legt der Sender nach der Übertragung des achten Bits die Leitung L1 bei 40 auf High-Level. Die Übertragung des Bestätigungs-Bits (A-Bit) wird mit einem Transmit-Signal TR an Leitung L2 bei 41 eingeleitet. Der Empfänger überschreibt nun bei 42 die Leitung L1 mit dem Pegel des A-Bits. Danach validiert er das A-Bit durch ein Quittierimpuls (AK) 43 an Leitung L3. Der Sender erkennt bei 44 das A-Bit und bereitet die Übertragung des nächsten Bytes vor, indem er den Pegel für das erste Bit bei 44 an die Datenleitung L1 legt. Die Datenleitung behält dabei den Low-Pegel noch bei.

Der Sender bestätigt das Einlesen des A-Bits und das Anlegen des ersten Datenbits durch ein Transmit-Signal 45 auf der Leitung L2. Der Empfänger nimmt daraufhin den Pegel für das Bestätigungssignal bei 46 von der Leitung L1 fort. Die Übertragung kann nun für das nächste Byte fortgesetzt werden.

Wie ein Vergleich zwischen den Figuren 4 und 6 zeigt, sind beim Schreiben und Lesen die Funktionen der Leitungen L2 und L3 miteinander vertauscht. Beim Schreiben werden über Leitung L2 die Transmit-Signale TR und über Leitung L3 die Quittiersignale AK übertragen. Beim Lesen werden dagegen über Leitung L2 die Quittiersignale und über Leitung L3 die Transmit-Signale übertragen.

**Patentansprüche**

1.  Anschlußeinheit für ein Hausleitsystem mit Datenübertragungsnetz, mit einer Busankopplungs-Einheit (BA) und einem damit verbundenen gerätespezifischen Adapter (AD), welche über eine Datenleitung (L1) und eine Transmit-Signale (TR) übertragende zweite Leitung (L2) miteinander verbunden sind und als Sender und Empfänger miteinander kommunizieren,

    **dadurch gekennzeichnet,**

    daß der jeweilige Empfänger auf einer dritten Leitung (L3) immer dann ein Quittiersignal (AK) an den Sender liefert, wenn er vom Sender ein Transmit-Signal (TR) empfangen hat, und daß der Sender das nächstfolgende Datensignal (DA) erst dann liefert, wenn er das Quittiersignal (AK) erhalten hat.

2. Anschlußeinheit nach Anspruch 1, dadurch gekennzeichnet, daß beim Schreiben die Transmit-Signale (TR) über die zweite Leitung (L2) und die Quittiersignale (AK) über die dritte Leitung (L3) übertragen werden und daß beim Lesen die Transmit-Signale (TR) über die dritte Leitung (L3) und die Quittiersignale (AK) über die zweite Leitung (L2) übertragen werden.

3. Anschlußeinheit nach Anspruch 1 oder 2, dadurch gekennzeichnet, daß an die Datenleitung (L1) und die zweite Leitung (L2), nicht aber an die dritte Leitung (L3), ein auslesbarer Speicher (12) angeschlossen ist.

4. Anschlußeinheit nach einem der Ansprüche 1 bis 3, dadurch gekennzeichnet, daß im Anschluß an eine Serie von Datenbits (Bit 1-8) auf der Datenleitung (L1) ein Bestätigungssignal (A-Bit) übertragen wird, daß beim Schreiben der Empfänger während des Quittiersignals des letzten Datenbits (Bit 8) die Datenleitung (L1) mit einem definierten Pegel überschreibt und daß daraufhin der Sender das Bestätigungssignal (A-Bit) überträgt (Fig. 4).

5. Anschlußeinheit nach einem der Ansprüche 1 bis 4, dadurch gekennzeichnet, daß im Anschluß an eine Serie von Datenbits (Bit 1-8) auf der Datenleitung (L1) ein Bestätigungssignal (A-Bit) übertragen wird, daß beim Lesen der Sender während des Quittiersignals (AK) des letzten Datenbits die Datenleitung mit einem definierten Pegel belegt (40) und daß daraufhin der Empfänger diesen Signalpegel mit dem Bestätigungssignal (A-Bit) überschreibt (Fig. 6).

# FIG.1

# FIG.2

# FIG.3

# FIG.4

FIG.5

FIG.6